# EUROPEAN PATENT SPECIFICATION

(11) **EP 4 538 993 B1**
(45) Date of publication and mention of the grant of the patent: **18.03.2026**
(21) Application number: 24192402.6
(22) Date of filing: 01.08.2024
(51) Int. Cl.: G06V 10/82, G06V 20/66

(54) **METHOD AND DEVICE FOR AUTHENTICATING A WATCH**
VERFAHREN UND VORRICHTUNG ZUR AUTHENTIFIZIERUNG EINER ARMBANDUHR
PROCÉDÉ ET DISPOSITIF D'AUTHENTIFICATION D'UNE MONTRE

(30) Priority: 10.10.2023 HK 32023080589
(43) Date of publication of application: 16.04.2025
(73) Proprietor: Watch God Group Limited, Hong Kong 999077 (HK)
(72) Inventor: LAM, Felix Kelson, Hong Kong (HK)
(74) Representative: Klunker IP Patentanwälte PartG mbB

(56) References cited:
- CN-A- 102 136 072
- CN-A- 112 686 892
- US-A1- 2022 164 590

## Description

### TECHNICAL FIELD

The present disclosure relates to the field of computer technologies, and in particular to a method and device for authenticating a watch.

### BACKGROUND

With the development of technology, watches, as daily necessities, are worn on the user's wrist. Some watches are mid to high-end consumer goods. These watches consist of numerous components, such as watch case, dial, hour hand, minute hand, second hand, and so on. In real life, there are counterfeit watches on the market, with corresponding defects in their components. However, these defects cannot be observed by the user's naked eyes. Currently, the commonly used method for authenticating a watch still relies on visual observation, leading to lower authentication accuracy in the conventional method for authenticating a watch.

A system for authenticating watches is known from US 202/0164590, which discloses obtaining an image of a watch face, extracting characteristic image features and motion information, and comparing these with stored reference data to determine the authenticity of the watch.

### SUMMARY

The invention is defined in the appended claims. An object of the present disclosure is to provide a method and device for authenticating a watch, which can improve the authentication accuracy of the method for authenticating the watch and achieve automatic watch authentication, thus avoiding limited visual observation by the user.

According to a first aspect of the embodiments of the present disclosure, a method for authenticating a watch is provided, including: acquiring an authentication signal of the watch; acquiring an image of the watch based on the authentication signal of the watch; performing image authentication according to the image, and outputting defect information, the defect information being distinguishing information in appearance between a counterfeit watch and a genuine watch; and, outputting an evaluation result of the watch according to at least one kind of the defect information.

The acquiring the image of the watch based on the authentication signal of the watch, includes: analyzing the authentication signal of the watch and determining operation information for photographing; adjusting multiple angles of the watch according to the operation information for photographing; triggering photographing of the watch and acquiring multiple images of the watch at multiple angles, if the watch is at corresponding angles.

The acquiring the image of the watch based on the authentication signal of the watch, further includes: arranging the multiple images; traversing the multiple images and labeling respective components in the images; performing statistics according to the labeled components in the images, to ensure presentation of the components of the watch in at least one of the images.

The performing image authentication according to the image, and outputting defect information, the defect information being distinguishing information in appearance between a counterfeit watch and a genuine watch, includes: performing grayscale processing on the image and determining regions corresponding to the components according to labels in the image; associating the regions with names of the components and determining respective regions of the components; magnifying the regions of the components; selecting differential points in the magnified regions of the components and determining shapes and positions of the differential points; determining marks, shapes or surfaces according to the shapes and positions of the differential points, and outputting the defect information, the defect information being distinguishing information in appearance between a counterfeit watch and a genuine watch.

In one embodiment, the selecting differential points in the magnified regions of the components and determining shapes and positions of the differential points, includes: acquiring the magnified regions, and traversing the magnified regions of the components; inputting the magnified regions of the components into a differential point learning model and highlighting the differential points; outlining the highlighted differential points to determine the shapes of the differential points.

In one embodiment, the selecting differential points in the magnified regions of the components and determining shapes and positions of the differential points, includes: determining positions of the highlighted differential points in the coordinate system of the images based on the highlighted differential points.

In one embodiment, the determining marks, shapes or surfaces according to the shapes and positions of the differential points, and outputting the defect information, includes: acquiring a defect learning model, wherein the defect learning model has been trained based on shapes and positions of previous differential points; inputting the shapes and positions of the differential points into the defect learning model to determine the regions where the differential points are located, wherein the regions where the differential points are located are the marks, the shapes, or the surfaces; outputting the defect information according to the regions where the differential points are located.

In one embodiment, the outputting an evaluation result of the watch according to at least one kind of the defect information, includes: acquiring the at least one kind of the defect information; associating the at least one kind of the defect information with an authenticity relationship table of the watch, to output the evaluation result of the watch.

In one embodiment, the outputting an evaluation result of the watch according to at least one kind of the defect information, further includes: if the watch is a counterfeit watch, storing the defect information to form a defect information set; determining a counterfeiting manner of the counterfeit watch according to the defect information set.

According to a second aspect of the embodiments of the present disclosure, a device for authenticating a watch is provided, including: an acquisition module configured to acquire an authentication signal of the watch; a photographing module configured to acquire an image of the watch based on the authentication signal of the watch; an authentication module configured to perform image authentication according to the image, and output defect information, the defect information being distinguishing information in appearance between a counterfeit watch and a genuine watch; and a result module configured to output an evaluation result of the watch according to at least one kind of the defect information.

According to a third aspect of the embodiments of the present disclosure, an electronic device is provided, including: one or more processors; and a storage apparatus for storing one or more programs, wherein when the one or more programs are executed by the one or more processors, the one or more processors implement the above method for authenticating a watch.

According to a fourth aspect of the embodiments of the present disclosure, a computer-readable storage medium is provided, on which a computer program is stored, wherein the computer program, when executed by a processor, implements the above method for authenticating a watch.

Compared to the prior art, beneficial effects of the present disclosure are: an image of the watch is acquired based on the authentication signal of the watch, to authenticate the image; at this time, image authentication is performed according to the image, and defect information is outputted; and an evaluation result of the watch is outputted according to at least one kind of the defect information, to achieve automatic watch authentication; moreover, defect information from the image is fully used as a basis for evaluating the watch, thereby enhancing the authentication accuracy of the method for authenticating the watch and enabling automatic watch authentication, and avoiding the need for the user to rely on limited visual observation.

### BRIEF DESCRIPTION OF THE DRAWINGS

FIG. 1 shows a schematic flowchart of a method for authenticating a watch according to an embodiment of the present disclosure;
FIG. 2 shows a schematic flowchart of S120 in FIG. 1;
FIG. 3 shows a schematic flowchart of S130 in FIG. 1;
FIG. 4 shows a schematic flowchart of S140 in FIG. 1;
FIG. 5 to FIG.7 show schematic diagrams of defect information of a method for authenticating a watch according to an embodiment of the present disclosure;
FIG. 8 shows a block diagram of a device for authenticating a watch according to an embodiment of the present disclosure;
FIG. 9 shows a schematic diagram of a computer system suitable for implementing an electronic device of an embodiment of the present disclosure.

### DETAILED DESCRIPTION

The exemplary embodiments will now be described more comprehensively with reference to the accompanying drawings. However, it should be understood that exemplary embodiments can be implemented in various forms and should not be construed as limited to the examples described herein; instead, these embodiments are provided, so as to make the present disclosure more comprehensive and complete, and convey the conception of the exemplary embodiments to those skilled in the art.

Additionally, features, structures, or characteristics described may be combined in any suitable manner in one or more embodiments. In the following description, numerous specific details are provided to give a thorough understanding of the embodiments of the present disclosure. However, those skilled in the art will recognize that the technical solutions of the present disclosure may be practiced without one or more of the specific details, or may employ other methods, components, apparatuses, steps, etc. In other instances, known methods, apparatuses, implementations, or operations may not be described or depicted in detail to avoid obscuring various aspects of the present disclosure.

The block diagrams shown in the drawings are merely functional entities and do not necessarily correspond to physically separate entities. That is, these functional entities can be implemented in software form, or in one or more hardware modules or integrated circuits, or in different networks and/or processor apparatuses and/or microcontroller apparatuses.

The flowcharts shown in the drawings are merely illustrative and do not necessarily include all contents and operations/steps, nor are they necessarily performed in the order described. For example, some operations/steps may be decomposed, and some operations/steps may be merged or partially combined, so the actual execution order may change depending on the actual circumstances.

With the development of technology, watches, as daily necessities, are worn on the user's wrist. Some watches are mid to high-end consumer goods. These watches consist of numerous components, such as the watch case, the dial, the hour hand, the minute hand, the second hand, and so forth. In real life, there are counterfeit watches on the market, with corresponding defects in their components. However, these defects cannot be observed by the naked eyes of the user. Currently, the commonly used method for authenticating a watch still relies on visual observation, leading to lower authentication accuracy in the conventional method for authenticating a watch.

In order to solve the above technical problems, the purpose of the present disclosure is to provide a method and device for authenticating a watch, which can improve the authentication accuracy of the method for authenticating the watch and achieve automatic watch authentication, thus avoiding limited visual observation by the user.

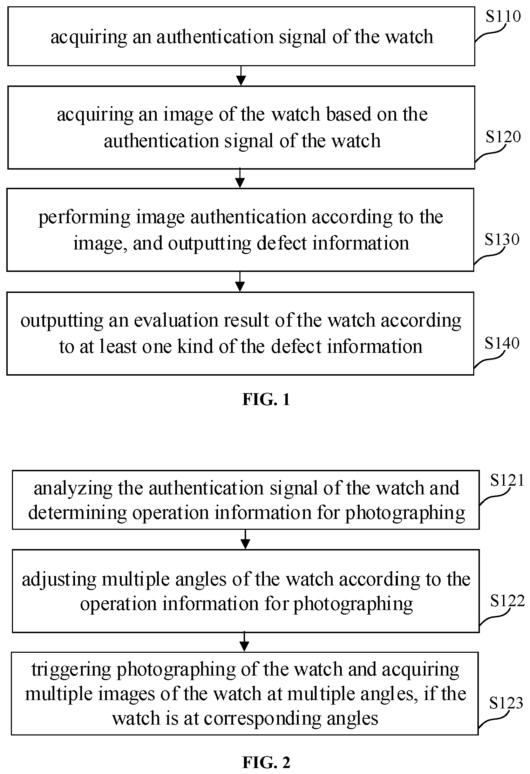

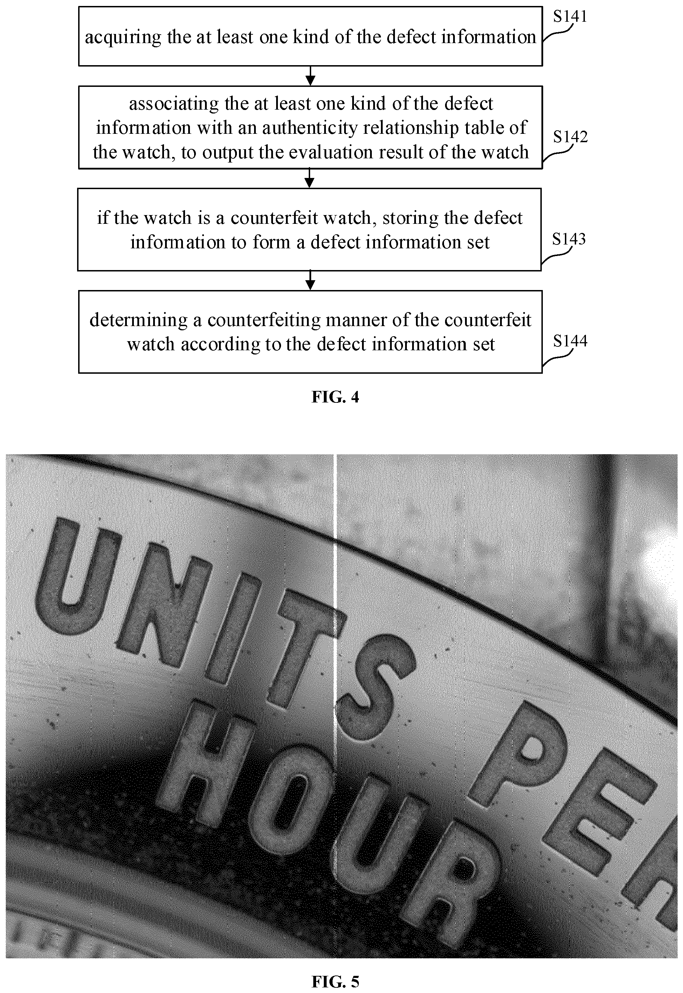

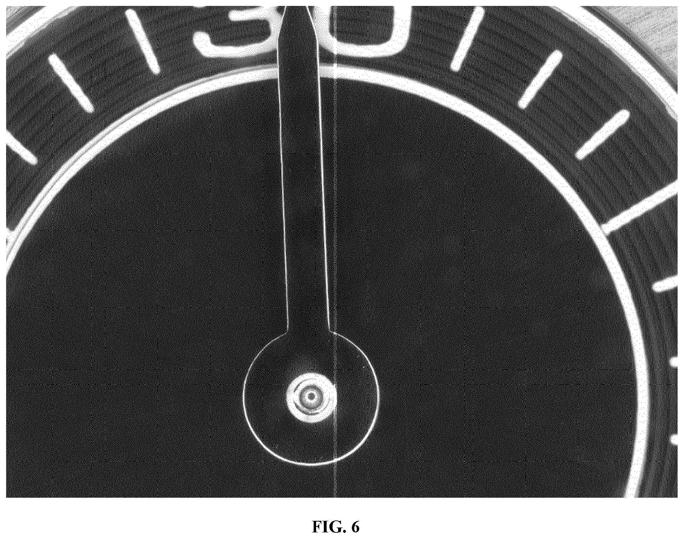

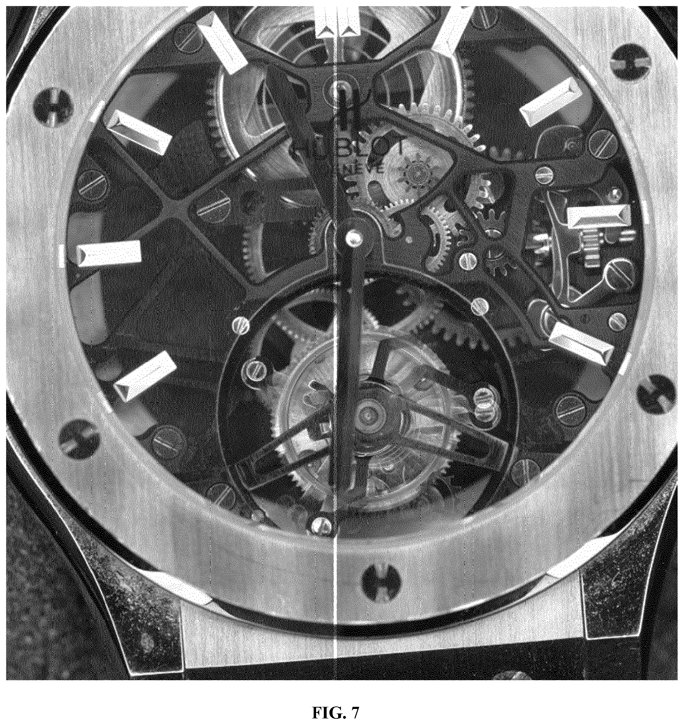

FIG. 1 illustrates a flowchart of a method for authenticating a watch according to an exemplary embodiment. The method for authenticating the watch can be applied to an electronic device such as a detection device. The watch may include, but is not limited to, an ordinary watch, a smart watch, a music watch, and the like. Referring to FIG. 1 to FIG. 7, the method for authenticating the watch includes at least the step S110 to step S 140, as detailed below (the following is an example of applying this method to a watch):
In step S110, an authentication signal of the watch is acquired.

In an embodiment of the present disclosure, the watch can reach the detection device by a conveyor belt or be manually moved to the detection device. The detection device determines that the watch is in a station to be detected through infrared sensing or photography, and acquires the authentication signal of the watch. At this time, the authentication signal of the watch can be triggered by the watch being in the station to be detected or by an externally connected mobile terminal. The detection device is started by the authentication signal of the watch to authenticate the watch, facilitating the automatic authentication of the watch by the detection device. Optionally, the authentication signal can be an electronic switch signal or a network signal.

Referring to FIG. 2, in step S120, the watch is photographed based on the authentication signal of the watch, thereby acquiring an image of the watch.

In an embodiment of the present disclosure, photographing of the watch is triggered based on the authentication signal of the watch, facilitating start of photographing the watch, so as to acquire the image of the watch. Simultaneously, the watch is rotated at multiple angles to acquire images of the watch at multiple angles. By the images of the watch at multiple angles, it is ensured that all components of the watch are within the scope of photography. Furthermore, the condition of each component in the watch is determined by the corresponding image, ensuring that the image of the corresponding component is used for the subsequent image authentication, so as to authenticate a defect of the component.

In one embodiment, the acquiring the images of the watch at multiple angles based on the authentication signal of the watch, includes:
Step S121: the authentication signal of the watch is analyzed and the operation information for photographing is determined.

In an embodiment of the present disclosure, the authentication signal of the watch is analyzed to determine the operation information for photographing based on the analyzed authentication signal. This facilitates the photographing arrangement of the watch at multiple angles by the operation information for photographing, enabling the rotation control of the watch at multiple angles, and ensuring movement of the watch at multiple angles. Optionally, the watch is photographed by a photographing device. At this time, a photographing end of the photographing device faces toward the watch, and photographs the watch to acquire the image of the watch. The photographing device receives the operation information for photographing, facilitating the corresponding photography of the watch at the states of the multiple angles.

Step S122: the multiple angles of the watch are adjusted according to the operation information for photographing.

In an embodiment of the present disclosure, the operation information for photographing is traversed to retrieve angle information of the watch according to specified terms, thus determining the angle information of the watch by the operation information for photographing. This facilitates the adjustment of multiple angles of the watch by the angle information of the watch, completing the rotation arrangement of the watch at the multiple angles.

The watch is in a station to be detected, which serves as the upper surface of the rotating table. When the rotating table receives the corresponding operation information for photographing, the rotating table rotates to the corresponding angle according to the corresponding operation information for photographing, facilitating the adjustment of the multiple angles of the watch.

Step S123: photographing of the watch is triggered and the images of the watch at multiple angles are acquired, if the watch is at the corresponding angle.

In an embodiment of the present disclosure, the watch is sequentially positioned at the multiple angles under the drive of the rotating table. If the watch is at the corresponding angle, an in-position signal is triggered. The in-position signal triggers photographing of the watch, allowing the camera to automatically photograph the watch when the in-position signal is triggered. Thus, the image of the watch at that angle is acquired. The watch needs to be positioned at the multiple angles, so that multiple positioning signals are outputted to acquire the images of the watch at the multiple angles.

In an embodiment of the present disclosure, the acquiring the images of the watch at the multiple angles based on the authentication signal of the watch, further includes: the multiple images are arranged; the multiple images are traversed and respective components in the images are labeled; statistics is performed according to the labeled components in the images and presentation of respective components of the watch in at least one of the images is ensured; if there is an unlabeled component in the image, an angle of the watch is adjusted based on a position of the unlabeled component until the unlabeled component is presented in the image.

The multiple images are arranged, so as to sequentially arrange the multiple images in chronological or angular order, forming an image set. When traversing the multiple images in the image set, the multiple images are traversed, and regions are circled by lines in the images to label the components in the regions. This enables labeling of various components in the images. The labeled components are collected, so as to compare with the component list of the watch to determine whether all components are present.

At this time, statistics is performed according to the labeled components in the images and presentation of respective components of the watch in at least one of the images is ensured. This ensures that the authentication of images is performed under the condition of all components being present, enabling a one by one examination for defects in each component. if there is an unlabeled component in the image, an angle of the watch is adjusted based on a position of the unlabeled component until the unlabeled component is presented in the image. This ensures that the image authentication is performed under the condition of all components being present, and supplementary adjustments are made to the angle to avoid omissions.

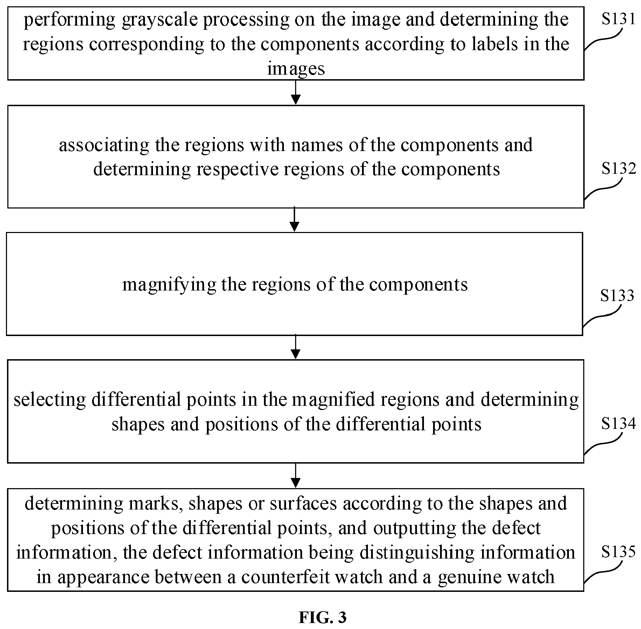

Referring to FIG. 3, in step S130, image authentication is performed according to the image, and defect information is outputted. The defect information is distinguishing information in appearance between a counterfeit watch and a genuine watch.

In an embodiment of the present disclosure, image authentication is performed according to the image, and defect information is outputted accordingly. This allows for the determination of the defect information for each component, thus determining the evaluation result of the watch according to the defect information of each component. The defect information includes a mark defect, a component shape defect or a component surface defect.

In the actual counterfeiting process, counterfeiters use inferior components for replacement or use second-hand components for replacement. At this time, the mark defect refers to a defect in the appearance of the mark or logo on the component. The component shape defect refers to a deformation defect in the shape and contour of the component. The component surface defect refers to a polishing defect and a stain defect on the surface of the component.

In one embodiment of the present disclosure, the performing image authentication according to the image, and outputting defect information, wherein the defect information comprises a mark defect, a component shape defect or a component surface defect, includes:
Step S131: grayscale processing is performed on the image and the regions corresponding to the components in the images are determined according to labels.

In one embodiment of the present disclosure, the images at various angles are acquired and grayscale processing is performed on the images. This facilitates further performing of region processing on the grayscale-processed images to form the region of each component. At this time, the regions corresponding to the labeled components in the images are determined, allowing for determination of the region corresponding to the component and then determination of the defect information according to further processing of the region.

Step S132: the regions are associated with names of the components and respective regions of the components are determined.

In one embodiment of the present disclosure, the initial contours of the components are determined based on the morphology of the regions. The types of the components are determined according to the initial contour of the components, enabling the association of the regions with names of the components to ensure correspondence between the regions and the names of the components, thus determining the respective regions of the components.

Step S133: the regions of the components are magnified.

In one embodiment of the present disclosure, the regions of the components are magnified to facilitate finding the magnified regions of the components, and the regions that may not be visible by the naked eye, so as to detect the defects in the regions, improving the accuracy of defect detection. Additionally, background highlighting may be applied to the magnified regions to enhance the brightness of defect points, further improving the accuracy of defect detection.

Step S134: differential points in the magnified regions of the components are selected and shapes and positions of the differential points are determined.

In one embodiment of the present disclosure, the magnified regions are acquired, and the magnified regions of the components are traversed; the magnified regions are inputted into a differential point learning model and the differential points are highlighted; the highlighted differential points are outlined to determine the shapes of the differential points; the positions of the highlighted differential points in the coordinate system of the images are determined based on the highlighted differential points. The differential point learning model is trained by previous regions of the components and differential points. Optionally, the image of the watch can be magnified by a magnification device. At this time, the magnification device acquires the image and magnifies the image to highlight the regions of the components, allowing for further analysis of the magnified regions of the components.

The differential point learning model rapidly confirms the differential points within the magnified regions of the components, thereby enhancing the traversing efficiency of the differential points. These differential points are then highlighted for easy authentication, facilitating the delineation of differential points and subsequent processing. At this time, the highlighted differential points are outlined to determine the shapes of the differential points. the positions of the highlighted differential points in the coordinate system of the images are determined based on the highlighted differential points.

Step S135: marks, shapes or surfaces are determined according to the shapes and positions of the differential points, and the defect information is outputted. the defect information is distinguishing information in appearance between a counterfeit watch and a genuine watch.

In one embodiment of the present disclosure, a defect learning model is acquired, wherein the defect learning model has been trained based on shapes and positions of previous differential points; the shapes and positions of the differential points are inputted into the defect learning model to determine the regions where the differential points are located, wherein the regions where the differential points are located are the marks, the shapes, or the surfaces; the defect information is outputted according to the regions where the differential points are located. the defect information is distinguishing information in appearance between a counterfeit watch and a genuine watch. At this time, the defect information includes at least one of a mark defect, a component shape defect or a component surface defect, or combination thereof.

Referring to FIG. 3 to FIG. 7, in step S140, an evaluation result of the watch is outputted according to at least one kind of the defect information.

In one embodiment of the present disclosure, at least one kind of the defect information is acquired. The defect is determined according to the at least one kind of the defect information, and subsequently, the evaluation result of the watch is outputted by the defect, so that the evaluation result of the watch is outputted while ensuring the accuracy of the defect information. As a result, the authentication of the watch is guaranteed to facilitate the automatic authentication of the watch, and the defect information in the image is fully utilized as the basis for the evaluation result of the watch, which improves the authentication accuracy of the method for authenticating the watch and realizes the automatic authentication of the watch, avoiding the user to make limited observations using the human eyes. Optionally, the defect authentication device can be used to output the evaluation result of the watch for the defect. In addition, various analysis devices can be used to perform metal analysis and travel time analysis on the components, which are not limited here. Among them, the metal analysis device analyzes the metal composition of the component to facilitate the authentication of the counterfeit component to determine the authenticity of the watch, and the travel time analysis device can compare the hour and minute travel times of the watch to facilitate determining of the accuracy of the hour and minute hands of the watch, thereby determining authenticity of the watch.

In one embodiment of the present disclosure, the outputting an evaluation result of the watch according to at least one kind of the defect information, includes:
Step S141: the at least one kind of the defect information is acquired;
In the embodiment of the present disclosure, the defect information includes a mark defect, a component shape defect or a component surface defect. Since all new watches are detected for components before being sold, each component is in good condition, and each component is in a sealed state. For a counterfeiting watch, the components in a counterfeit watch may have a mark defect, a component shape defect or a component surface defect. By determining at least one kind of the defect information, a problem corresponding to a component in the watch is determined, thereby determining the evaluation result of the watch.
Step S142: the at least one kind of the defect information is associated with an authenticity relationship table of the watch, to output the evaluation result of the watch;
In the embodiment of the present disclosure, the at least one kind of the defect information is sorted in order to form a defect information set, so that the defect information set is associated with the authenticity relationship table of the watch. At this time, the authenticity relationship table of the watch records a combination table formed by various defect information, and records a specific defect of the component, so that the evaluation result of the watch can be outputted by associating the at least one kind of the defect information with an authenticity relationship table of the watch, thereby directly determining the evaluation result of the watch, and improving the authentication efficiency and accuracy of the watch.
Step S143: if the watch is a counterfeit watch, the defect information is stored to form a defect information set;
Step S144: a counterfeiting manner of the counterfeit watch is determined according to the defect information set.

In the embodiment of the present disclosure, if the watch is a counterfeiting watch, the counterfeiting watch is traced. At this time, the defect information is stored and a defect information set is formed. Moreover, the counterfeiting manner of each counterfeiting watch is matched according to the defect information set, in order to determine the counterfeiting manner of the counterfeiting watch according to the defect information set, and then further control the counterfeiting manner of the counterfeiting watch.

Compared to the prior art, the beneficial effects of the present disclosure are: images of the watch at multiple angles are acquired based on the authentication signal of the watch, to authenticate the images. At this time, image authentication is performed according to the images, and defect information is outputted; and an evaluation result of the watch is outputted according to at least one kind of the defect information, to achieve automatic watch authentication. Moreover, defect information from the images is fully used as a basis for evaluating the watch, thereby enhancing the authentication accuracy of the method for authenticating the watch and enabling automatic watch authentication, and avoiding the need for the user to rely on limited visual observation.

The following describes device embodiments of the present disclosure, which can be used to perform the method for authenticating the watch in the above embodiments of the present disclosure. For details not disclosed in the embodiments of the device of the present disclosure, please refer to the embodiments of the method for authenticating the watch mentioned above in the present disclosure.

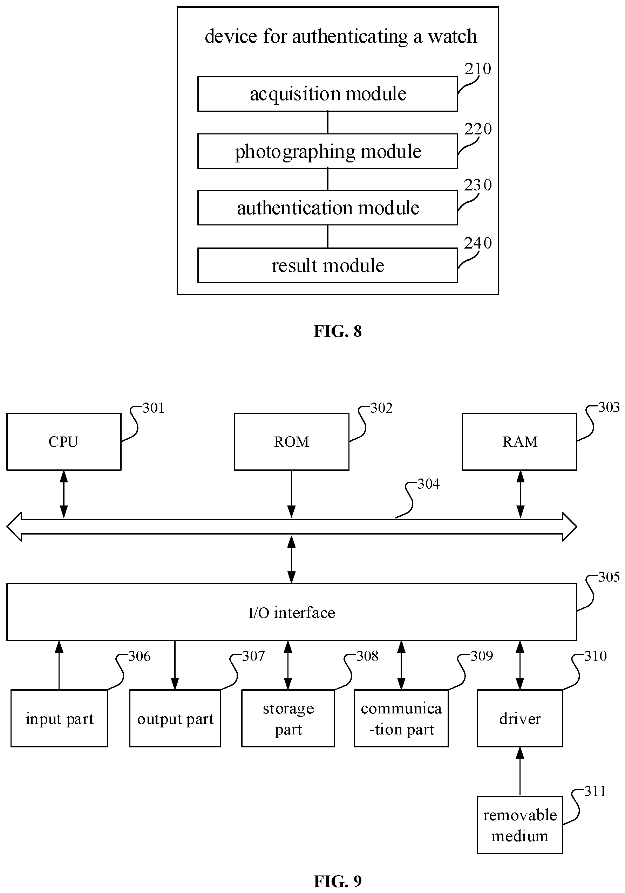

FIG. 8 shows a block diagram of a device for authenticating a watch according to an embodiment of the present disclosure.

Referring to FIG. 8, a device for authenticating a watch according to one embodiment of the present disclosure includes:
an acquisition module 210 configured to acquire an authentication signal of the watch;
a photographing module 220 configured to acquire images of the watch at multiple angles based on the authentication signal of the watch;
an authentication module 230 configured to perform image authentication according to the image, and output defect information, the defect information including a mark defect, a component shape defect or a component surface defect;
a result module 240 configured to output an evaluation result of the watch according to at least one kind of the defect information.

In one embodiment of the present disclosure, the photographing module 220 is further configured to: arrange the multiple images; traverse the multiple images and label respective components in the images; perform statistics according to the labeled components in the images, to ensure presentation of the components of the watch in at least one of the images; and if there is an unlabeled component in the image, adjust an angle of the watch based on a position of the unlabeled component until the unlabeled component is presented in the image.

In one embodiment of the present disclosure, the authentication module 230 is further configured to acquire the magnified regions, and traverse the magnified regions of the components; input the magnified regions into a differential point learning model and highlight the differential points; the highlighted differential points are outlined to determine the shapes of the differential points; and determine the positions of the highlighted differential points in the coordinate system of the images based on the highlighted differential points.

In one embodiment of the present disclosure, the authentication module 230 is further configured to acquire a defect learning model, wherein the defect learning model has been trained based on shapes and positions of previous differential points; input the shapes and positions of the differential points into the defect learning model to determine the regions where the differential points are located, wherein the regions where the differential points are located are the marks, the shapes, or the surfaces; output the defect information according to the regions where the differential points are located, wherein the defect information includes a mark defect, a component shape defect or a component surface defect.

In one embodiment of the present disclosure, an electronic device is provided, including:
one or more processors;
a storage apparatus for storing one or more programs, wherein when the one or more programs are executed by the one or more processors, the one or more processors implement the method for authenticating the watch as described in the previous embodiments.

In an example, FIG. 9 shows a schematic diagram of a computer system suitable for implementing an electronic device of an embodiment of the present disclosure.

It should be noted that the computer system of the electronic device shown in FIG. 9 is only an example and should not impose any restrictions on the functions and use scope of the embodiments of the present disclosure.

As shown in FIG. 9, the computer system includes a central processing unit (CPU) 301 (i.e., the processor as mentioned above), which can perform various appropriate actions and processes process according to a program stored in a Read-Only Memory (ROM) 302 or a program loaded from the storage part 308 into a Random Access Memory (RAM) 303, such as perform the methods described in the above embodiments. It should be understood that RAM 303 and ROM 302 are the storage apparatuses as mentioned above. In RAM 303, various programs and data required for system operation are also stored. CPU 301, ROM 302 and RAM 303 are connected to each other via bus 304. An Input/Output (I/O) interface 305 is also connected to the bus 304.

The following components are connected to the I/O interface 305: the input part 306 including a keyboard, a mouse, etc.; the output part 307 including such as a Cathode Ray Tube (CRT), A Liquid Crystal Display (LCD), etc., and a speaker, etc.; a storage part 308 including a hard disk, etc.; and a communication part 309 including a network interface card such as a LAN (Local Area Network) card, a modem, etc. The communication part 309 performs communication processing via a network such as Internet. A driver 310 is also connected to the I/O interface 305 as required. A removable medium 311, such as a magnetic disk, an optical disk, a magneto-optical disk, a semiconductor memory, etc., is installed on the driver 310 as required, so that the computer program read therefrom is installed into the storage part 308 as required.

In particular, according to an embodiment of the present disclosure, the processes described above with reference to the flowcharts may be implemented as computer software programs. For example, an embodiment of the present disclosure includes a computer program product including a computer program carried on a computer-readable medium, the computer program containing a computer program for performing the method illustrated in the flowchart. In such an embodiment, the computer program may be downloaded and installed from the network via the communication part 309, and/or installed from the removable media 311. When the computer program is executed by the central processing unit (CPU) 301, various functions defined in the system of the present disclosure are executed.

It should be noted that the computer-readable medium shown in the embodiment of the present disclosure may be a computer-readable signal medium or a computer-readable storage medium, or any combination of the above two. The computer-readable storage medium may be, for example, but is not limited to, an electrical, magnetic, optical, electromagnetic, infrared, or semiconductor system, apparatus or device, or any combination thereof. More specific examples of the computer-readable storage medium may include, but are not limited to: an electrical connection having one or more wires, a portable computer disk, a hard drive, a Random Access Memory (RAM), A Read Only Memory (ROM), a Erasable Programmable Read Only Memory (EPROM), a flash memory, an optical fiber, a portable compact disk read-only memory (CD-ROM) , an optical storage device, a magnetic storage device, or any combination of the above. In the present disclosure, a computer-readable storage medium may be any tangible medium that contains or stores a program for use by or in connection with an instruction execution system, apparatus, or device.

In the present disclosure, a computer-readable signal medium may include data signals propagated in a baseband or as part of a carrier wave, which carry a computer-readable computer program. Such propagated data signals may take a variety of forms, including but not limited to electromagnetic signals, optical signals, or any suitable combination of the above. A computer-readable signal medium may also be any computer-readable medium other than a computer-readable storage medium, which may send, propagate, or transmit a program for use by or in conjunction with an instruction execution system, apparatus, or device. The computer program contained on the computer-readable medium may be transmitted using any appropriate medium, including but not limited to: wireless, wired, etc., or any suitable combination of the above.

The flowcharts and block diagrams in the drawings illustrate the architecture, functionality, and operation of possible implementations of the systems, methods, and computer program products according to various embodiments of the present disclosure. Each block in the flowchart or block diagram may represent part of a module, a program segment, or codes. The above part of the module, the program segment, or the codes includes one or more executable instructions for implementing the specified logical function. It should also be noted that, in some alternative implementations, the functions noted in the block may occur out of the order noted in the drawings. For example, two blocks shown one after another may actually execute substantially in parallel, or they may sometimes execute in the reverse order, depending on the functionality involved. It will also be noted that each block in the block diagram or flowchart, and a combinations of blocks in the block diagram or flowchart, can be implemented by special purpose hardware-based systems that perform the specified functions or operations, or may be implemented by a dedicated hardware-based system that performs the specified functions or operations, or may be implemented by a combination of a dedicated hardware and computer instructions.

The units involved in the embodiments of the present disclosure can be implemented in software or hardware, and the described units can also be provided in the processor. Among them, the names of these units do not constitute a limitation on the unit itself under certain circumstances.

As another aspect, the present disclosure also provides a computer-readable medium. The computer-readable medium may be included in the electronic device described in the above embodiments; it may also exist independently without being assembled into the electronic device. The above computer-readable medium carries one or more programs. When the one or more programs are executed by an electronic device, the electronic device implements the method described in the above embodiments.

It should be noted that although several modules or units of the device for action execution are mentioned in the above detailed description, this division is not mandatory. In fact, according to an embodiment of the present disclosure, the features and functions of two or more modules or units described above may be embodied in one module or unit. Conversely, the features and functions of one module or unit described above may be further divided to be embodied by multiple modules or units.

Through the above description of the embodiments, those skilled in the art can easily understand that the example embodiments described here can be implemented by software, or can be implemented by software combined with necessary hardware. Therefore, the technical solution according to the embodiment of the present disclosure can be embodied in the form of a software product, which can be stored in a non- transitory storage medium (which can be a CD-ROM, a USB disk, a movable hard disk, etc.) or on the network, including several instructions to cause a computing device (which can be a personal computer, a server, a touch terminal, or a network device, etc.) to execute the method according to the embodiment of the present disclosure.

Other embodiments of the disclosure will be readily apparent to those skilled in the art from consideration of the specification and practice of the embodiments disclosed herein. the present disclosure is intended to cover any variations, uses, or adaptations of the present disclosure that follow the general principles of the present disclosure and include common knowledge or customary technical means in the technical field that are not disclosed in the present disclosure.

It should be understood that the present disclosure is not limited to the precise construction described above and illustrated in the drawings, and that various modifications and changes may be made without departing from the scope thereof. The scope of the present disclosure is limited only by the appended claims.

In the present disclosure, the terms "first" and "second" are used for descriptive purposes only and cannot be understood as indicating or implying relative importance. The term "multiple" refers to two or more than two, unless expressly limited otherwise.

## Claims

1. A method for authenticating a watch, comprising:
acquiring an authentication signal of the watch;
acquiring an image of the watch based on the authentication signal of the watch;
performing image authentication according to the image, and outputting defect information, the defect information being distinguishing information in appearance between a counterfeit watch and a genuine watch;
outputting an evaluation result of the watch according to at least one kind of the defect information,
wherein the acquiring the image of the watch based on the authentication signal of the watch, comprises:
analyzing the authentication signal of the watch and determining operation information for photographing;
adjusting multiple angles of the watch according to the operation information for photographing;
triggering photographing of the watch and acquiring multiple images of the watch at multiple angles, if the watch is at corresponding angles,
wherein the acquiring the image of the watch based on the authentication signal of the watch, further comprises:
arranging the multiple images;
traversing the multiple images and labeling respective components in the images;
performing statistics according to the labeled components in the images, to ensure presentation of the components of the watch in at least one of the images,
wherein the performing image authentication according to the image, and outputting defect information, the defect information being distinguishing information in appearance between a counterfeit watch and a genuine watch, comprises:
performing grayscale processing on the image and determining regions corresponding to the components according to labels in the image;
associating the regions with names of the components and determining respective regions of the components;
magnifying the regions of the components;
selecting differential points in the magnified regions of the components and determining shapes and positions of the differential points;
determining marks, shapes or surfaces according to the shapes and positions of the differential points, and outputting the defect information, the defect information being distinguishing information in appearance between a counterfeit watch and a genuine watch.

2. The method for authenticating the watch according to claim 1, wherein the selecting differential points in the magnified regions of the components and determining shapes and positions of the differential points, comprises:
acquiring the magnified regions, and traversing the magnified regions of the components;
inputting the magnified regions of the components into a differential point learning model and highlighting the differential points;
outlining the highlighted differential points to determine the shapes of the differential points.

3. The method for authenticating the watch according to claim 1, wherein the selecting differential points in the magnified regions of the components and determining shapes and positions of the differential points, comprises:
determining positions of the highlighted differential points in the coordinate system of the images based on the highlighted differential points.

4. The method for authenticating the watch according to claim 1, wherein the determining marks, shapes or surfaces according to the shapes and positions of the differential points, and outputting the defect information, comprises:
acquiring a defect learning model, wherein the defect learning model has been trained based on shapes and positions of previous differential points;
inputting the shapes and positions of the differential points into the defect learning model to determine the regions where the differential points are located, wherein the regions where the differential points are located are the marks, the shapes, or the surfaces;
outputting the defect information according to the regions where the differential points are located.

5. The method for authenticating the watch according to claim 4, wherein the outputting an evaluation result of the watch according to at least one kind of the defect information, comprises:
acquiring the at least one kind of the defect information;
associating the at least one kind of the defect information with an authenticity relationship table of the watch, to output the evaluation result of the watch.

6. The method for authenticating the watch according to claim 5, wherein the outputting an evaluation result of the watch according to at least one kind of the defect information, further comprises:
if the watch is a counterfeit watch, storing the defect information to form a defect information set;
determining a counterfeiting manner of the counterfeit watch according to the defect information set.

7. A device for authenticating a watch performing a method according to any of claims 1 to 6, comprising:
an acquisition module configured to acquire an authentication signal of the watch;
a photographing module configured to acquire an image of the watch based on the authentication signal of the watch;
an authentication module configured to perform image authentication according to the image, and output defect information, the defect information being distinguishing information in appearance between a counterfeit watch and a genuine watch;
a result module configured to output an evaluation result of the watch according to at least one kind of the defect information.

## Patentansprüche

1. Verfahren zur Authentifizierung einer Uhr, umfassend:
Erfassen eines Authentifizierungssignals der Uhr;
Erfassen eines Bildes der Uhr auf der Grundlage des Authentifizierungssignals der Uhr;
Durchführen einer Bildauthentifizierung anhand des Bildes und Ausgeben von Defektinformationen, wobei die Defektinformationen Informationen sind, die das Aussehen einer gefälschten Uhr von dem einer echten Uhr unterscheiden;
Ausgeben eines Bewertungsergebnisses der Uhr gemäß mindestens einer Art der Defektinformationen,
wobei das Erfassen des Bildes der Uhr auf der Grundlage des Authentifizierungssignals der Uhr umfasst:
Analysieren des Authentifizierungssignals der Uhr und Bestimmen von Betriebsinformationen zum Fotografieren;
Anpassen mehrerer Winkel der Uhr gemäß den Betriebsinformationen zum Fotografieren;
Auslösen des Fotografierens der Uhr und Erfassen mehrerer Bilder der Uhr in mehreren Winkeln, wenn sich die Uhr in entsprechenden Winkeln befindet,
wobei das Erfassen des Bildes der Uhr auf der Grundlage des Authentifizierungssignals der Uhr ferner umfasst:
Anordnen der mehreren Bilder;
Durchlaufen der mehreren Bilder und Kennzeichnen der jeweiligen Komponenten in den Bildern;
Durchführen von Statistiken gemäß den gekennzeichneten Komponenten in den Bildern, um sicherzustellen, dass die Komponenten der Uhr in mindestens einem der Bilder dargestellt werden,
wobei das Durchführen der Bildauthentifizierung gemäß dem Bild und das Ausgeben von Defektinformationen, die Unterscheidungsinformationen hinsichtlich des Aussehens zwischen einer gefälschten Uhr und einer echten Uhr sind, umfasst:
Durchführen einer Graustufenverarbeitung des Bildes und Bestimmen von Bereichen, die den Komponenten gemäß den Beschriftungen im Bild entsprechen;
Zuordnen der Bereiche zu Namen der Komponenten und Bestimmen der jeweiligen Bereiche der Komponenten;
Vergrößern der Bereiche der Komponenten;
Auswählen von Differenzpunkten in den vergrößerten Bereichen der Komponenten und Bestimmen von Formen und Positionen der Differenzpunkte;
Bestimmen von Markierungen, Formen oder Oberflächen gemäß den Formen und Positionen der Differenzpunkte und Ausgeben der Defektinformationen, wobei die Defektinformationen Unterscheidungsinformationen im Aussehen zwischen einer gefälschten Uhr und einer echten Uhr sind.

2. Verfahren zur Authentifizierung der Uhr gemäß Anspruch 1, wobei das Auswählen von Differenzpunkten in den vergrößerten Bereichen der Komponenten und das Bestimmen von Formen und Positionen der Differenzpunkte umfasst:
Erfassen der vergrößerten Bereiche und Durchlaufen der vergrößerten Bereiche der Komponenten;
Eingeben der vergrößerten Bereiche der Komponenten in ein Differenzpunkt-Lernmodell und Hervorheben der Differenzpunkte;
Umreißen der hervorgehobenen Differenzpunkte, um die Formen der Differenzpunkte zu bestimmen.

3. Verfahren zur Authentifizierung der Uhr gemäß Anspruch 1, wobei das Auswählen von Differenzpunkten in den vergrößerten Bereichen der Komponenten und das Bestimmen von Formen und Positionen der Differenzpunkte umfasst:
Bestimmen der Positionen der hervorgehobenen Differenzpunkte im Koordinatensystem der Bilder auf der Grundlage der hervorgehobenen Differenzpunkte.

4. Verfahren zur Authentifizierung der Uhr gemäß Anspruch 1, wobei das Bestimmen von Markierungen, Formen oder Oberflächen gemäß den Formen und Positionen der Differenzpunkte und das Ausgeben der Defektinformationen umfasst:
Erfassen eines Defektlernmodells, wobei das Defektlernmodell auf der Grundlage von Formen und Positionen früherer Differenzpunkte trainiert wurde;
Eingeben der Formen und Positionen der Differenzpunkte in das Defektlernmodell, um die Bereiche zu bestimmen, in denen sich die Differenzpunkte befinden, wobei die Bereiche, in denen sich die Differenzpunkte befinden, die Markierungen, die Formen oder die Oberflächen sind;
Ausgabe der Defektinformationen entsprechend den Bereichen, in denen sich die Differenzpunkte befinden.

5. Verfahren zur Authentifizierung der Uhr gemäß Anspruch 4, wobei das Ausgeben eines Bewertungsergebnisses der Uhr gemäß mindestens einer Art der Defektinformationen umfasst:
Erfassen der mindestens einen Art der Defektinformationen;
Zuordnen der mindestens einen Art der Defektinformationen zu einer Authentizitätsbeziehungstabelle der Uhr, um das Bewertungsergebnis der Uhr auszugeben.

6. Verfahren zur Authentifizierung der Uhr gemäß Anspruch 5, wobei das Ausgeben eines Bewertungsergebnisses der Uhr gemäß mindestens einer Art der Defektinformationen ferner umfasst:
wenn die Uhr eine gefälschte Uhr ist, Speichern der Defektinformationen, um einen Defektinformationssatz zu bilden;
Bestimmen einer Fälschungsart der gefälschten Uhr gemäß dem Defektinformationssatz.

7. Vorrichtung zur Authentifizierung einer Uhr, die ein Verfahren gemäß einem der Ansprüche 1 bis 6 ausführt, umfassend:
ein Erfassungsmodul, das so konfiguriert ist, dass es ein Authentifizierungssignal der Uhr erfasst;
ein Fotografiemodul, das so konfiguriert ist, dass es ein Bild der Uhr auf der Grundlage des Authentifizierungssignals der Uhr erfasst;
ein Authentifizierungsmodul, das so konfiguriert ist, dass es eine Bildauthentifizierung gemäß dem Bild durchführt und Defektinformationen ausgibt, wobei die Defektinformationen Unterscheidungsinformationen hinsichtlich des Aussehens zwischen einer gefälschten Uhr und einer echten Uhr sind;
ein Ergebnismodul, das so konfiguriert ist, dass es ein Bewertungsergebnis der Uhr gemäß mindestens einer Art der Defektinformationen ausgibt.

## Revendications

1. Procédé pour authentifier une montre, comprenant:
l'acquisition d'un signal d'authentification de la montre;
l'acquisition d'une image de la montre sur la base du signal d'authentification de la montre;
la réalisation d'une authentification d'image conformément à l'image et l'émission en sortie d'une information de défaut, l'information de défaut étant une information permettant d'effectuer un distinguo en termes d'apparence entre une montre contrefaite et une montre authentique; et
l'émission en sortie d'un résultat d'évaluation de la montre conformément à au moins un type de l'information de défaut,
dans lequel l'acquisition de l'image de la montre sur la base du signal d'authentification de la montre comprend:
l'analyse du signal d'authentification de la montre et la détermination d'une information opératoire pour une prise de photographie;
le réglage de multiples angles de la montre conformément à l'information opératoire pour la prise de photographie; et
le déclenchement de la prise de photographie de la montre et l'acquisition de multiples images de la montre selon de multiples angles, si la montre est selon des angles correspondants,
dans lequel l'acquisition de l'image de la montre sur la base du signal d'authentification de la montre comprend en outre:
l'agencement des multiples images;
le fait de parcourir les multiples images et d'identifier des composants respectifs dans les images; et
la réalisation de statistiques conformément aux composants identifiés dans les images, afin d'assurer la présentation des composants de la montre dans au moins l'une des images,
dans lequel la réalisation de l'authentification d'image conformément à l'image et l'émission en sortie d'une information de défaut, l'information de défaut étant une information permettant d'effectuer un distinguo en termes d'apparence entre une montre contrefaite et une montre authentique, comprennent:
la réalisation d'un traitement d'échelle de gris sur l'image et la détermination de régions qui correspondent aux composants conformément à des identifications dans l'image;
l'association des régions avec des noms des composants et la détermination de régions respectives des composants;
l'agrandissement des régions des composants ;
la sélection de points différentiels dans les régions agrandies des composants et la détermination de formes et de positions des points différentiels; et
la détermination de marques, de formes ou de surfaces conformément aux formes et aux positions des points différentiels et l'émission en sortie de l'information de défaut, l'information de défaut étant une information permettant d'effectuer un distinguo en termes d'apparence entre une montre contrefaite et une montre authentique.

2. Procédé pour authentifier la montre selon la revendication 1, dans lequel la sélection de points différentiels dans les régions agrandies des composants et la détermination de formes et de positions des points différentiels comprennent:
l'acquisition des régions agrandies et le fait de parcourir les régions agrandies des composants;
l'entrée des régions agrandies des composants à l'intérieur d'un modèle d'apprentissage par points différentiels et la mise en évidence des points différentiels; et
la délimitation des points différentiels mis en évidence pour déterminer les formes des points différentiels.

3. Procédé pour authentifier la montre selon la revendication 1, dans lequel la sélection de points différentiels dans les régions agrandies des composants et la détermination de formes et de positions des points différentiels comprennent:
la détermination de positions des points différentiels mis en évidence dans le système de coordonnées des images sur la base des points différentiels mis en évidence.

4. Procédé pour authentifier la montre selon la revendication 1, dans lequel la détermination de marques, de formes ou de surfaces conformément aux formes et aux positions des points différentiels et l'émission en sortie de l'information de défaut comprennent:
l'acquisition d'un modèle d'apprentissage par défauts, dans lequel le modèle d'apprentissage par défauts a été entraîné sur la base de formes et de positions de points différentiels antérieurs;
l'entrée des formes et des positions des points différentiels à l'intérieur du modèle d'apprentissage par défauts afin de déterminer les régions au niveau desquelles les points différentiels sont localisés, dans lequel les régions au niveau desquelles les points différentiels sont localisés sont les marques, les formes ou les surfaces; et
l'émission en sortie de l'information de défaut conformément aux régions au niveau desquelles les points différentiels sont localisés.

5. Procédé pour authentifier la montre selon la revendication 4, dans lequel l'émission en sortie d'un résultat d'évaluation de la montre conformément à au moins un type de l'information de défaut comprend:
l'acquisition de l'au moins un type de l'information de défaut; et
l'association de l'au moins un type de l'information de défaut avec une table de relation(s) d'authenticité de la montre, afin d'émettre en sortie le résultat d'évaluation de la montre.

6. Procédé pour authentifier la montre selon la revendication 5, dans lequel l'émission en sortie d'un résultat d'évaluation de la montre conformément à au moins un type de l'information de défaut comprend en outre:
si la montre est une montre contrefaite, le stockage de l'information de défaut afin de former un ensemble d'informations de défaut; et
la détermination d'un mode de contrefaçon de la montre contrefaite conformément à l'ensemble d'informations de défaut.

7. Dispositif pour authentifier une montre en réalisant un procédé selon l'une quelconque des revendications 1 à 6, comprenant:
un module d'acquisition configuré pour acquérir un signal d'authentification de la montre;
un module de prise de photographie configuré pour acquérir une image de la montre sur la base du signal d'authentification de la montre;
un module d'authentification configuré pour réaliser une authentification d'image conformément à l'image et pour émettre en sortie une information de défaut, l'information de défaut étant une information permettant d'effectuer un distinguo en termes d'apparence entre une montre contrefaite et une montre authentique; et
un module de résultat pour émettre en sortie un résultat d'évaluation de la montre conformément à au moins un type de l'information de défaut.
